(19) Europäisches Patentamt
European Patent Office
Office européen des brevets

(11) EP 3 677 505 B1

(12) EUROPEAN PATENT SPECIFICATION

(45) Date of publication and mention of the grant of the patent:
**20.03.2024 Bulletin 2024/12**

(21) Application number: **20150133.5**

(22) Date of filing: **02.01.2020**

(51) International Patent Classification (IPC):
***B64C 27/57*** *(2006.01)* ***G05D 1/00*** *(2024.01)*
***G05D 1/06*** *(2006.01)* ***G05D 1/08*** *(2006.01)*
***G01P 5/16*** *(2006.01)* ***G01P 5/14*** *(2006.01)*
***G01P 7/00*** *(2006.01)* ***G01P 3/62*** *(2006.01)*
***G01P 5/18*** *(2006.01)* ***G01C 21/16*** *(2006.01)*
*G01P 15/14* *(2013.01)*

(52) Cooperative Patent Classification (CPC):
**B64C 27/57; G01C 21/165; G01P 3/62; G01P 7/00; G05D 1/0077; G05D 1/0858;** G01P 5/16

(54) **SYSTEM AND METHOD FOR CONTROLLING ROTORCRAFT**

SYSTEM UND VERFAHREN ZUR STEUERUNG EINES DREHFLÜGLERS

SYSTÈME ET PROCÉDÉ DE COMMANDE D’HÉLICOPTÈRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **02.01.2019 US 201962787602 P**
**15.03.2019 EP 19163098**
**20.05.2019 US 201916416508**

(43) Date of publication of application:
**08.07.2020 Bulletin 2020/28**

(73) Proprietor: **Textron Innovations Inc.**
**Providence, Rhode Island 02903 (US)**

(72) Inventors:
- **GILLETT, Luke Dayfdd**
  **Grapevine, TX 76051 (US)**
- **KIM, Sung Kyun**
  **Bedford, TX 76021 (US)**
- **WORSHAM II, Robert Earl**
  **Weatherford, TX 76088 (US)**

(74) Representative: **Barker Brettell LLP**
**100 Hagley Road**
**Edgbaston**
**Birmingham B16 8QQ (GB)**

(56) References cited:
**EP-A1- 3 379 257**
**WO-A1-2016/037035**
**GB-A- 2 136 576**
**US-A- 3 188 861**
**US-A- 3 724 786**
**US-A1- 2009 299 554**
**US-B2- 9 108 745**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 677 505 B1

## Description

### PRIORITY CLAIM AND CROSS-REFERENCE

This application claims the benefit of and priority to U.S. Provisional Patent Application Ser. No. 62/787,602, filed on January 2, 2019, entitled "System and Method for Controlling a Rotorcraft".

### BACKGROUND

A rotorcraft may include one or more rotor systems including one or more main rotor systems. A main rotor system generates aerodynamic lift to support the weight of the rotorcraft in flight and thrust to move the rotorcraft in forward flight. Another example of a rotorcraft rotor system is a tail rotor system. A tail rotor system may generate thrust in the same direction as the main rotor system's rotation to counter the torque effect created by the main rotor system. For smooth and efficient flight in a rotorcraft, a pilot balances the engine power, main rotor collective thrust, main rotor cyclic thrust and the tail rotor thrust, and a control system may assist the pilot in stabilizing the rotorcraft and reducing pilot workload. WO 2016/037035 relates to flight control systems, and more particularly, to aircraft fly-by-wire control systems,

### SUMMARY

According to a first aspect of the invention, there is provided a method as defined in claim 1. According to a second aspect of the invention, there is provided a rotorcraft as defined in claim 12. Some optional or preferred features are defined in the dependent claims.

In some embodiments of the method, combining the first sensor signal and the second sensor signal includes: integrating the second sensor signal with respect to time to obtain a first filtered signal; and adding the first filtered signal and the first sensor signal to obtain a second filtered signal, the second filtered signal including the estimated airspeed values of the rotorcraft. In some embodiments of the method, the first aircraft sensor is a pitot tube. In some embodiments of the method, the second aircraft sensor is an accelerometer. In some embodiments of the method, the predetermined value is a first threshold when the rotorcraft is accelerating, and the predetermined value is a second threshold when the rotorcraft is decelerating, the second threshold being less than the first threshold. In some embodiments of the method, the first threshold is 40 knots, and the second threshold is 25 knots.

In some embodiments of the rotorcraft, the flight control computer is configured to estimate the determined airspeed values by: combining the raw airspeed values and the raw forward acceleration values with a complementary filter to determine estimated airspeed values; and using the estimated airspeed values as the determined airspeed values. In some embodiments of the rotorcraft, the flight control computer is configured to combine the raw airspeed values and the raw forward acceleration values by: integrating the raw forward acceleration values with respect to time to obtain integrated forward acceleration values; and adding the integrated forward acceleration values and the raw airspeed values to obtain the estimated airspeed values. In some embodiments of the rotorcraft, the predetermined value is a first threshold when the first speed of the rotorcraft is less than or equal to the predetermined value, and the predetermined value is a second threshold when the first speed of the rotorcraft is greater than the predetermined value, the second threshold being less than the first threshold.

### BRIEF DESCRIPTION OF THE DRAWINGS

For a more complete understanding of the present invention, and the advantages thereof, reference is now made to the following descriptions taken in conjunction with the accompanying drawings, in which:

Figure 1 illustrates a rotorcraft, according to some embodiments;
Figure 2A is a block diagram of a fly-by-wire flight control system, according to some embodiments;
Figure 2B illustrates the inside of a cockpit, according to some embodiments;
Figure 3 is a block diagram of a three-loop flight control system, according to some embodiments;
Figure 4 is a block diagram of a first system for vertical speed estimation, according to some embodiments;
Figure 5 is a block diagram of a second system for vertical speed estimation, according to some embodiments;
Figure 6 is a block diagram of a method for vertical speed estimation, according to some embodiments;
Figure 7 is a block diagram of a filter, according to some embodiments;
Figure 8 is a block diagram of a method for airspeed estimation, according to some embodiments; and
Figure 9 is a block diagram of a filter, according to some embodiments.

## DETAILED DESCRIPTION OF ILLUSTRATIVE EMBODIMENTS

Illustrative embodiments of the system and method of the present disclosure are described below. In the interest of clarity, all features of an actual implementation may not be described in this specification. It will of course be appreciated that in the development of any such actual embodiment, numerous implementation-specific decisions may be made to achieve the developer's specific goals, such as compliance with system-related and business-related constraints, which will vary from one implementation to another. Moreover, it should be appreciated that such a development effort might be complex and time-consuming but would nevertheless be a routine undertaking for those of ordinary skill in the art having the benefit of this disclosure.

Reference may be made herein to the spatial relationships between various components and to the spatial orientation of various aspects of components as the devices are depicted in the attached drawings. However, as will be recognized by those skilled in the art after a complete reading of the present disclosure, the devices, members, apparatuses, etc. described herein may be positioned in any desired orientation. Thus, the use of terms such as "above," "below," "upper," "lower," or other like terms to describe a spatial relationship between various components or to describe the spatial orientation of aspects of such components should be understood to describe a relative relationship between the components or a spatial orientation of aspects of such components, respectively, as the device described herein may be oriented in any desired direction.

The increasing use of rotorcraft, in particular, for commercial and industrial applications, has led to the development of larger more complex rotorcraft. However, as rotorcraft become larger and more complex, the differences between flying rotorcraft and fixed wing aircraft has become more pronounced. Since rotorcraft use one or more main rotors to simultaneously provide lift, control attitude, control altitude, and provide lateral or positional movement, different flight parameters and controls are tightly coupled to each other, as the aerodynamic characteristics of the main rotors affect each control and movement axis. For example, the flight characteristics of a rotorcraft at cruising speed or high speed may be significantly different than the flight characteristics at hover or at relatively low speeds. Additionally, different flight control inputs for different axes on the main rotor, such as cyclic inputs or collective inputs, affect other flight controls or flight characteristics of the rotorcraft. For example, pitching the nose of a rotorcraft forward to increase forward speed will generally cause the rotorcraft to lose altitude. In such a situation, the collective may be increased to maintain level flight, but the increase in collective requires increased power at the main rotor which, in turn, requires additional anti-torque force from the tail rotor. This is in contrast to fixed wing systems where the control inputs are less closely tied to each other and flight characteristics in different speed regimes are more closely related to each other.

Recently, fly-by-wire (FBW) systems have been introduced in rotorcraft to assist pilots in stably flying the rotorcraft and to reduce workload on the pilots. The FBW system may provide different control characteristics or responses for cyclic, pedal or collective control input in the different flight regimes, and may provide stability assistance or enhancement by decoupling physical flight characteristics so that a pilot is relieved from needing to compensate for some flight commands issued to the rotorcraft. FBW systems may be implemented in one or more flight control computers (FCCs) disposed between the pilot controls and flight control systems, providing corrections to flight controls that assist in operating the rotorcraft more efficiently or that put the rotorcraft into a stable flight mode while still allowing the pilot to override the FBW control inputs. The FBW systems in a rotorcraft may, for example, automatically adjust power output by the engine to match a collective control input, apply collective or power correction during a cyclic control input, provide automation of one or more flight control procedures, provide for default or suggested control positioning, or the like.

FBW systems for rotorcraft must provide stable flight characteristics for FBW system controlled flight parameters while permitting the pilot to override or adjust any suggested flight parameters suggested by the FBW system. Additionally, in providing enhanced control and automated functionality for rotorcraft flight, the FBW system must maintain an intuitive and easy to use flight control system for the pilot. Thus, the FBW system adjusts the pilot flight controls so that the controls are in a position associated with the relevant flight parameter. For example, the FBW system may adjust the collective stick to provide suggested or FBW system controlled flight parameters, and which reflect a collective or power setting. Thus, when the pilot releases the collective stick and the FBW system provides collective control commands, the collective stick is positioned intuitively in relation to the actual power or collective setting so that, when the pilot grasps the collective stick to retake control, the control stick is positioned where the pilot expects the stick to be positioned for the actual collective setting of the main rotor. Similarly, the FBW system use the cyclic stick to, for example, adjust for turbulence, drift or other disturbance to the flight path, and may move the cyclic stick as the FBW system compensates the cyclic control. Thus, when the pilot grasps the cyclic stick to take control of flight from the FBW system, the cyclic stick is positioned to reflect the actual cyclic settings.

Figure 1 illustrates a rotorcraft 101, according to some embodiments. The rotorcraft 101 has a main rotor system 103, which includes a plurality of main rotor blades 105. The pitch of each main rotor blade 105 may be controlled by a swashplate 107 in order to selectively control the attitude, altitude and movement of the rotorcraft 101. The swashplate 107 may be used to collectively and/or cyclically change the pitch of the main rotor blades 105. The rotorcraft 101 also has an anti-torque system, which may include a tail rotor 109, no-tail-rotor (NOTAR), or dual main rotor system. In rotorcraft with a tail rotor 109, the pitch of each tail rotor blade 111 is collectively changed in order to vary thrust of the anti-torque system, providing directional control of the rotorcraft 101. The pitch of the tail rotor blades 111 is changed by one or more tail rotor actuators. In some embodiments, the FBW system sends electrical signals to the tail rotor actuators or main rotor actuators to control flight of the rotorcraft.

Power is supplied to the main rotor system 103 and the anti-torque system by engines 115. There may be one or more engines 115, which may be controlled according to signals from the FBW system. The output of the engine 115 is provided to a driveshaft 117, which is mechanically and operatively coupled to the main rotor system 103 and the anti-torque system through a main rotor transmission 119 and a tail rotor transmission, respectively.

The rotorcraft 101 further includes a fuselage 125 and tail section 123. The tail section 123 may have other flight control devices such as horizontal or vertical stabilizers, rudder, elevators, or other control or stabilizing surfaces that are used to control or stabilize flight of the rotorcraft 101. The fuselage 125 includes a cockpit 127, which includes displays, controls, and instruments. It should be appreciated that even though rotorcraft 101 is depicted as having certain illustrated features, the rotorcraft 101 may have a variety of implementation-specific configurations. For instance, in some embodiments, cockpit 127 is configured to accommodate a pilot or a pilot and co-pilot, as illustrated. It is also contemplated, however, that rotorcraft 101 may be operated remotely, in which case cockpit 127 could be configured as a fully functioning cockpit to accommodate a pilot (and possibly a co-pilot as well) to provide for greater flexibility of use, or could be configured with a cockpit having limited functionality (e.g., a cockpit with accommodations for only one person who would function as the pilot operating perhaps with a remote co-pilot or who would function as a co-pilot or back-up pilot with the primary piloting functions being performed remotely). In yet other contemplated embodiments, rotorcraft 101 could be configured as an unmanned vehicle, in which case cockpit 127 could be eliminated entirely in order to save space and cost.

Figure 2A is a block diagram of a fly-by-wire flight control system 201 for the rotorcraft 101, according to some embodiments. Figure 2B illustrates the inside of the cockpit 127, according to some embodiments, and is described in conjunction with Figure 2A. A pilot may manipulate one or more pilot flight controls in order to control flight of the rotorcraft. The pilot flight controls may include manual controls such as a cyclic stick 231 in a cyclic control assembly 217, a collective stick 233 in a collective control assembly 219, and pedals 239 in a pedal control assembly 221. Inputs provided by the pilot to the pilot flight controls may be transmitted mechanically and/or electronically (e.g., via the FBW flight control system) to flight control devices by the flight control system 201. Flight control devices may represent devices operable to change the flight characteristics of the rotorcraft 101. Flight control devices on the rotorcraft may include mechanical and/or electrical systems operable to change the positions or angle of attack of the main rotor blades 105 and the tail rotor blades 111 or to change the power output of the engines 115, as examples. Flight control devices include systems such as the swashplate 107, tail rotor actuator 113, and systems operable to control the engines 115. The flight control system 201 may adjust the flight control devices independently of the flight crew in order to stabilize the rotorcraft, reduce workload of the flight crew, and the like. The flight control system 201 includes engine control computers (ECCUs) 203, flight control computers (FCCs) 205, and aircraft sensors 207, which collectively adjust the flight control devices.

The flight control system 201 has one or more FCCs 205. In some embodiments, multiple FCCs 205 are provided for redundancy. One or more modules within the FCCs 205 may be partially or wholly embodied as software and/or hardware for performing any functionality described herein. In embodiments where the flight control system 201 is a FBW flight control system, the FCCs 205 may analyze pilot inputs and dispatch corresponding commands to the ECCUs 203, the tail rotor actuator 113, and/or actuators for the swashplate 107. Further, the FCCs 205 are configured and receive input commands from the pilot controls through sensors associated with each of the pilot flight controls. The input commands are received by measuring the positions of the pilot controls. The FCCs 205 also control tactile cueing commands to the pilot controls or display information in instruments on, for example, an instrument panel 241.

The ECCUs 203 control the engines 115. For example, the ECCUs 203 may vary the output power of the engines 115 to control the rotational speed of the main rotor blades or the tail rotor blades. The ECCUs 203 may control the output power of the engines 115 according to commands from the FCCs 205, or may do so based on feedback such as measured revolutions per minute (RPM) of the main rotor blades.

The aircraft sensors 207 are in communication with the FCCs 205. The aircraft sensors 207 may include sensors for measuring a variety of rotorcraft systems, flight parameters, environmental conditions and the like. For example, the aircraft sensors 207 may include sensors for measuring airspeed, altitude, attitude, position, orientation, temperature, airspeed, vertical speed, and the like. Other aircraft sensors 207 could include sensors relying upon data or signals originating external to the rotorcraft, such as a global positioning system (GPS) sensor, a VHF Omnidirectional Range sensor, Instrument Landing System (ILS), and the like.

The cyclic control assembly 217 is connected to a cyclic trim assembly 229 having one or more cyclic position sensors 211, one or more cyclic detent sensors 235, and one or more cyclic actuators or cyclic trim motors 209. The cyclic position sensors 211 measure the position of the cyclic stick 231. In some embodiments, the cyclic stick 231 is a single control stick that moves along two axes and permits a pilot to control pitch, which is the vertical angle of the nose of the rotorcraft and roll, which is the side-to-side angle of the rotorcraft. In some embodiments, the cyclic control assembly 217 has separate cyclic position sensors 211 that measuring roll and pitch separately. The cyclic position sensors 211 for detecting roll and pitch generate roll and pitch signals, respectively, (sometimes referred to as cyclic longitude and cyclic latitude signals, respectively) which are sent to the FCCs 205, which controls the swashplate 107, engines 115, tail rotor 109 or related flight control devices.

The cyclic trim motors 209 are connected to the FCCs 205, and receive signals from the FCCs 205 to move the cyclic stick 231. In some embodiments, the FCCs 205 determine a suggested cyclic stick position for the cyclic stick 231 according to one or more of the collective stick position, the pedal position, the speed, altitude and attitude of the rotorcraft, the engine revolutions per minute (RPM), engine temperature, main rotor RPM, engine torque or other rotorcraft system conditions or flight conditions. The suggested cyclic stick position is a positon determined by the FCCs 205 to give a desired cyclic action. In some embodiments, the FCCs 205 send a suggested cyclic stick position signal indicating the suggested cyclic stick position to the cyclic trim motors 209. While the FCCs 205 may command the cyclic trim motors 209 to move the cyclic stick 231 to a particular position (which would in turn drive actuators associated with swashplate 107 accordingly), the cyclic position sensors 211 detect the actual position of the cyclic stick 231 that is set by the cyclic trim motors 209 or input by the pilot, allowing the pilot to override the suggested cyclic stick position. The cyclic trim motor 209 is connected to the cyclic stick 231 so that the pilot may move the cyclic stick 231 while the trim motor is driving the cyclic stick 231 to override the suggested cyclic stick position. Thus, in some embodiments, the FCCs 205 receive a signal from the cyclic position sensors 211 indicating the actual cyclic stick position, and do not rely on the suggested cyclic stick position to command the swashplate 107.

Similar to the cyclic control assembly 217, the collective control assembly 219 is connected to a collective trim assembly 225 having one or more collective position sensors 215, one or more collective detent sensors 237, and one or more collective actuators or collective trim motors 213. The collective position sensors 215 measure the position of a collective stick 233 in the collective control assembly 219. In some embodiments, the collective stick 233 is a single control stick that moves along a single axis or with a lever type action. A collective position sensor 215 detects the position of the collective stick 233 and sends a collective position signal to the FCCs 205, which controls engines 115, swashplate actuators, or related flight control devices according to the collective position signal to control the vertical movement of the rotorcraft. In some embodiments, the FCCs 205 may send a power command signal to the ECCUs 203 and a collective command signal to the main rotor or swashplate actuators so that the angle of attack of the main blades is raised or lowered collectively, and the engine power is set to provide the needed power to keep the main rotor RPM substantially constant.

The collective trim motor 213 is connected to the FCCs 205, and receives signals from the FCCs 205 to move the collective stick 233. Similar to the determination of the suggested cyclic stick position, in some embodiments, the FCCs 205 determine a suggested collective stick position for the collective stick 233 according to one or more of the cyclic stick position, the pedal position, the speed, altitude and attitude of the rotorcraft, the engine RPM, engine temperature, main rotor RPM, engine torque or other rotorcraft system conditions or flight conditions. The FCCs 205 generate the suggested collective stick position and send a corresponding suggested collective stick signal to the collective trim motors 213 to move the collective stick 233 to a particular position. The collective position sensors 215 detect the actual position of the collective stick 233 that is set by the collective trim motor 213 or input by the pilot, allowing the pilot to override the suggested collective stick position.

The pedal control assembly 221 has one or more pedal sensors 227 that measure the position of pedals or other input elements in the pedal control assembly 221. In some embodiments, the pedal control assembly 221 is free of a trim motor or actuator, and may have a mechanical return element that centers the pedals when the pilot releases the pedals. In other embodiments, the pedal control assembly 221 has one or more trim motors that drive the pedal to a suggested pedal position according to a signal from the FCCs 205. The pedal sensor 227 detects the position of the pedals 239 and sends a pedal position signal to the FCCs 205, which controls the tail rotor 109 to cause the rotorcraft to yaw or rotate around a vertical axis.

The cyclic trim motors 209 and collective trim motors 213 may drive the cyclic stick 231 and collective stick 233, respectively, to suggested positions. The cyclic trim motors 209 and collective trim motors 213 may drive the cyclic stick 231 and collective stick 233, respectively, to suggested positions, but this movement capability may also be used to provide tactile cueing to a pilot. The cyclic trim motors 209 and collective trim motors 213 may push the respective stick in a particular direction when the pilot is moving the stick to indicate a particular condition. Since the FBW system mechanically disconnects the stick from one or more flight control devices, a pilot may not feel a hard stop, vibration, or other tactile cue that would be inherent in a stick that is mechanically connected to a flight control assembly. In some embodiments, the FCCs 205 may cause the cyclic trim motors 209 and collective trim motors 213 to push against a pilot command so that the pilot feels a resistive force, or may command one or more friction devices to provide friction that is felt when the pilot moves the stick. Thus, the FCCs 205 control the feel of a stick by providing pressure and/or friction on the stick.

Additionally, the cyclic control assembly 217, collective control assembly 219 and/or pedal control assembly 221 may each have one or more detent sensors that determine whether the pilot is handling a particular control device. For example, the cyclic control assembly 217 may have a cyclic detent sensor 235 that determines that the pilot is holding the cyclic stick 231, while the collective control assembly 219 has a collective detent sensor 237 that determines whether the pilot is holding the collective stick 233. The cyclic detent sensor 235 and collective detent sensor 237 detect motion and/or position of the respective control stick that is caused by pilot input, as opposed to motion and/or position caused by commands from the FCCs 205, rotorcraft vibration, and the like and provide feedback signals indicative of such to the FCCs 205. When the FCCs 205 detect that a pilot has control of, or is manipulating, a particular control, the FCCs 205 may determine that stick to be out-of-detent (OOD). Likewise, the FCCs may determine that the stick is in-detent (ID) when the signals from the detent sensors indicate to the FCCs 205 that the pilot has released a particular stick. The FCCs 205 may provide different default control or automated commands to one or more flight systems based on the detent status of a particular stick or pilot control.

Figure 3 is a block diagram of the flight control system 201, according to some embodiments. Some operational aspects of the flight control system 201 are shown in a highly schematic fashion. In particular, the flight control system 201 is schematically shown as being implemented as a series of inter-related feedback loops running certain control laws. Although the flight control system 201 is illustrated as being a three-loop flight control system, it should be appreciated that the flight control system 201 could be implemented in a different manner, such as with a different quantity of control loops.

In some embodiments, elements of the flight control system 201 may be implemented at least partially by the FCCs 205. However, all, some, or none of the components (301, 303, 305, 307) of flight control system 201 could be located external or remote from the rotorcraft 101 and communicate to on-board devices through a network connection 309.

The flight control system 201 has a pilot input 311, an outer loop 313, a middle loop 315, an inner loop 317, a decoupler 319, and aircraft equipment 321 (corresponding, e.g., to flight control devices such as swashplate 107, tail rotor transmission 121, etc.; to actuators (not shown) driving the flight control devices; to sensors such as aircraft sensors 207, cyclic position sensors 211, collective position sensors 215, cyclic detent sensors 235, collective detent sensors 237, etc.; and the like).

In the example shown, a three-loop design separates the inner stabilization and rate feedback loops from outer guidance and tracking loops. The control law structure primarily assigns the overall stabilization task and related tasks of reducing pilot workload to inner loop 317. Next, the middle loop 315 (sometimes called the rate loop) provides rate augmentation. Outer loop 313 focuses on guidance and tracking tasks. Since inner loop 317 and middle loop 315 provide most of the stabilization, less control effort is required at the outer loop level. As representatively illustrated, a switch 323 may be provided to turn outer loop flight augmentation on and off, the tasks of outer loop 313 are not necessary for flight stabilization.

In some embodiments, the inner loop 317 and middle loop 315 include a set of gains and filters applied to roll/pitch/yaw 3-axis rate gyro and acceleration feedback sensors. Both the inner loop and rate loop may stay active, independent of various outer loop hold modes. Outer loop 313 may include cascaded layers of loops, including an attitude loop, a speed loop, a position loop, a vertical speed loop, an altitude loop, and a heading loop. According to some embodiments, the control laws running in the illustrated the loops allow for decoupling of otherwise coupled flight characteristics, which in turn may provide for more stable flight characteristics and reduced pilot workload. Furthermore, the outer loop 313 may allow for automated or semi-automated operation of certain high-level tasks or flight patterns, thus further relieving the pilot workload and allowing the pilot to focus on other matters including observation of the surrounding terrain.

The flight control system 201 may be realized as programming executed by the FCCs 205. The programming includes instructions implementing aspects of the flight control system 201. The FCCs 205 may include memories 325, such as non-transitory computer readable storage mediums, that store the programming. One or more processors 327 are connected to the memories 325, and are operable to execute the programming.

The flight control system 201 relies on accurately determining the position, velocity (or speed), and acceleration of the rotorcraft 101 when controlling flight. In particular, all three loops of the flight control system 201 use the vertical speed ($V_{V_SPD}$) of the rotorcraft 101. The use of inaccurate $V_{V_SPD}$ values may degrade the performance of the control laws implemented by the flight control system 201, and may result in partial or total failure of the rotorcraft 101. According to some embodiments, $V_{V_SPD}$ is estimated by performing complementary filtering with multiple signals containing values for $V_{V_SPD}$. Estimating the $V_{V_SPD}$ of the rotorcraft 101 by complementary filtering with multiple signals may improve the accuracy of $V_{V_SPD}$ values used by the flight control system 201.

Figure 4 is a block diagram of a first system 401 for $V_{V_SPD}$ estimation, according to some embodiments. The first system 401 has two inputs: a first measured vertical speed ($V_{M1}$) signal and a second measured vertical speed ($V_{M2}$) signal. The signals may be received from a variety of different sources, and as will be discussed below, may be indirectly determined by measuring other properties of the rotorcraft 101. The signals are noisy signals containing values for $V_{V_SPD}$. The noise in $V_{M1}$ and $V_{M2}$ may be located in different regions. In particular, $V_{M1}$ includes accurate $V_{V_SPD}$

values in the short-term but is noisy in the long-term (e.g., has low-frequency noise). Conversely, $V_{M2}$ includes accurate $V_{V_SPD}$ values in the long-term but is noisy in the short-term (e.g., has high-frequency noise). The first system 401 includes a high-pass filter 403, a low-pass filter 405, and a summer 405, each of which may be implemented as analog circuits or through digital signal processing in the FCCs 205, such as with a digital signal processor (DSP).

The high-pass filter 403 is used to filter low-frequency noise from $V_{M1}$, and the low-pass filter 405 is used to filter high-frequency noise from $V_{M2}$. Notably, the high-pass filter 403 and low-pass filter 405 are complementary filters. For example, if the transfer function of the high-pass filter 403 is F(s), then the transfer function of the low-pass filter 405 is the complement of F(s), e.g., 1 - *F(s).* In other words, the high-pass filter 403 and low-pass filter 405 sum to an all-pass filter having a value of 1. The summer 405 adds the filtered signals from the high-pass filter 403 and low-pass filter 405, thereby producing an estimated vertical speed ($V_{V_EST}$) signal. Although the $V_{V_EST}$ signal contains an estimation of $V_{V_SPD}$, it may contain more accurate $V_{V_SPD}$ values than the noisy signals $V_{M1}$ and $V_{M2}$ contain individually.

Figure 5 is a block diagram of a second system 501 for $V_{V_SPD}$ estimation, according to some embodiments. Like the first system 401, the second system 501 has two inputs ($V_{M1}$ and $V_{M2}$) and one output ($V_{V_EST}$). The second system 501 is equivalent to the first system 401, except the second system 501 only has a single filter 503 that operates on noise in the $V_{M1}$ and $V_{M2}$ signals. A summer 505 determines the difference between the input $V_{M1}$ and $V_{M2}$ signals (e.g., subtracts $V_{M1}$ from $V_{M2}$), and the filter 503 operates on that difference. A summer 507 then sums the filtered difference with the original $V_{M1}$ signal, thereby producing $V_{V_EST}$ as its output.

It should be appreciated that the first system 401 and second system 501 show some examples of complementary filters. Other configuration (such as that shown below in Figure 7) may also be used to implement complementary filtering.

Figure 6 is a block diagram of a method 601 for vertical speed estimation, according to some embodiments. The method 601 may be implemented as part of the flight control system 201. In particular, the FCCs 205 may perform the method 601 when controlling flight of the rotorcraft 101.

In process 603, the $V_{M1}$ signal is received. It should be appreciated that the $V_{M1}$ signal may be received through a variety of means or sources. In some embodiments, the $V_{M1}$ signal is directly transduced. For example, the $V_{M1}$ signal may be a sensor signal from an aircraft sensor 207 that directly measures vertical speed and produces a raw vertical speed value, such as with a variometer or other vertical speed indicator (VSI). In other embodiments, another sensor signal is transduced and the $V_{M1}$ signal is derived from the transduced sensor signal. For example, the $V_{M1}$ signal may be indirectly received by measuring vertical inertial acceleration (e.g., a(t)) of the rotorcraft 101. Vertical inertial acceleration may be measured with a first one of the aircraft sensors 207, such as with an accelerometer. The $V_{M1}$ signal is then obtained by integrating the vertical inertial acceleration with respect to time, as shown in Equation 1. Determining $V_{V_SPD}$ of the rotorcraft 101 by integrating the vertical inertial acceleration may be more accurate in the short-term than in the long-term.

$$V_{M1} = \int a(t)\,dt \qquad (1)$$

In process 605, the $V_{M2}$ signal is received. It should be appreciated that the $V_{M2}$ signal may be received through a variety of means or sources. In some embodiments, the $V_{M2}$ signal is directly transduced. For example, the $V_{M2}$ signal may be a sensor signal from an aircraft sensor 207 that directly measures vertical speed and produces a raw vertical speed value, such as with a variometer or other VSI. In other embodiments, another sensor signal is transduced and the $V_{M2}$ signal is derived from the transduced sensor signal. Different aircraft sensor 207 may be used to receive the $V_{M1}$ and $V_{M2}$ signals. For example, the $V_{M2}$ signal may be indirectly received by measuring vertical position (e.g., s(t)) of the rotorcraft 101. Vertical position may be measured with a second one of the aircraft sensors 207, such as with an air pressure sensor (e.g., a barometer), a GPS sensor, an ultrasonic or laser-based height measurement sensor, or the like. The $V_{M2}$ signal is then obtained by differentiating the vertical position with respect to time, as shown in Equation 2. Determining $V_{V_SPD}$ of the rotorcraft 101 by differentiating the vertical position may be more accurate in the long-term than in the short-term.

$$V_{M2} = \frac{d}{dt}s(t) \qquad (2)$$

In process 607, the $V_{M1}$ and $V_{M2}$ signals are combined with complementary filtering to determine a $V_{V_EST}$ signal, which indicates the $V_{V_EST}$ of the rotorcraft 101. The complementary filtering may be performed with a system such as the first system 401, the second system 501, or the like. As noted above, such filtering could be performed in hardware or in software.

In process 609, flight of the rotorcraft 101 is controlled based on $V_{V_EST}$ of the rotorcraft 101. The $V_{V_EST}$ value may be a variable used by one or more loops of the flight control system 201, such as the outer loop 313, middle loop 315, and/or inner loop 317. The flight control devices of the rotorcraft 101 may be adjusted to change the flight characteristics of the rotorcraft 101. For example, the swashplate 107 may be actuated based on $V_{V_EST}$ to maintain a particular speed or direction, to automate an approach to hover or landing, or the like. Likewise, the tail rotor actuator 113 may be adjusted based on $V_{V_EST}$. In some embodiments, the value of $V_{V_EST}$ may be used to influence other functionality of the flight control system 201. For example, the decoupler 319 may use $V_{V_EST}$ when decoupling pilot flight controls, or the middle loop 315 may use $V_{V_EST}$ when stabilizing the rotorcraft 101.

Figure 7 is a block diagram of a filter 701 that may be used to realize the first system 401 or second system 501, according to some embodiments. The filter 701 is a complimentary filter implemented with three integrators 703, 705, and 707. Further, the filter 701 is indicative of embodiments where the $V_{M1}$ and $V_{M2}$ signals are derived from transduced sensor signals. In particular, the $V_{M1}$ signal is derived from a signal from an altimeter (e.g., s(t)), and the $V_{M2}$ signal is derived from a signal from an accelerometer (e.g., a(t)). The filter 701 produces two output signals: $V_{V_EST}$ and $s(t)_{EST}$. The $s(t)_{EST}$ signal is an estimate of the altimeter signal, which is also filtered by complimentary filtering.

Resetting the integrators 703, 705, and 707 may ensure the filter 701 accurately produces the $V_{V_EST}$ signal. The integrators 703, 705, and 707 may be reset in a variety of ways, and may be reset to different values. According to some embodiments, the integrators 703, 705, and 707 may be reset when: (1) the FCCs 205 initially start up; (2) the FCCs 204 are reset; (3) the rotorcraft 101 is on the ground, as determined by weight-on-wheel sensors of the aircraft sensors 207; (4) an input signal of the filter 701 has failed; (5) any one of the integrators 703, 705, and 707 have reached their upper or lower bounds, which may be predefined values; and/or (6) the groundspeed or raw airspeed of the rotorcraft 101 is less than a predefined threshold.

In some embodiments, the filter 701 is reset in response to detecting the rotorcraft is grounded. Detecting the rotorcraft is grounded may include receiving a first weight signal from a weight-on-wheel sensor of the rotorcraft 101; determining, according to the first weight signal, a first wheel of the rotorcraft 101 is bearing more than a predetermined quantity of weight; and determining the rotorcraft 101 is grounded in response to the first wheel bearing more than the predetermined quantity of weight.

Upon a reset, the integrator 703 is reset to a value of zero, the integrator 705 is reset to the current vertical speed value as estimated by air data systems of the rotorcraft 101, and the integrator 707 is reset to the current altitude as estimated by air data systems of the rotorcraft 101. The air data systems of the rotorcraft 101 determine the vertical speed and altitude directly by transducing signals from air sensors of the aircraft sensors 207.

Although embodiments are described in the context of estimating the vertical speed ($V_{V_SPD}$) of the rotorcraft 101, it should be appreciated that embodiment techniques may be used to estimate speeds along other directions. For example, the airspeed of the rotorcraft 101 may also be estimated by complimentary filtering with multiple noisy signals. All three loops of the flight control system 201 also use the airspeed of the rotorcraft 101. The use of inaccurate airspeed values may degrade the performance of the control laws implemented by the flight control system 201, and may result in partial or total failure of the rotorcraft 101. According to some embodiments, the airspeed of the rotorcraft 101 may be estimated by performing complementary filtering with multiple signals containing values for the airspeed, e.g., signals with high-frequency noise and signals with low-frequency noise. Estimating the airspeed of the rotorcraft 101 by complementary filtering with multiple signals may improve the accuracy of airspeed values used by the flight control system 201.

Although estimating the various speeds of the rotorcraft 101 by combining multiple different signals may generally result in more accurate speed values, the estimated speed values may be inaccurate in some conditions. When the inputs to the complementary filter diverge by a large amount, the estimated airspeed of the rotorcraft 101 may be inaccurate. In some embodiments, estimation of the airspeed by complementary filtering may only be performed under conditions where the estimated airspeed is likely to be accurate. For example, the inputs to the complementary filter for estimating the airspeed may diverge by a large amount when the rotorcraft 101 is operating in hover, in high winds. In such conditions, the pilot of the rotorcraft 101 may attempt to counteract high winds by quickly changing the heading of the rotorcraft 101, e.g., by actuating the pedals 239. Executing such a quick maneuver may cause pitot-type sensors to falsely indicate a rapid change in longitudinal airspeed without a corresponding change in longitudinal acceleration. During such a maneuver, the longitudinal airspeed of the rotorcraft 101 estimated by the complimentary filter may be inaccurate. A similar phenomena may also occur for lateral airspeed. When the estimated airspeed of the rotorcraft 101 is inaccurate, directly measuring the airspeed of the rotorcraft 101 with, e.g., a pitot tube, an airspeed indicator (ASI), or the like may provide more accurate airspeed values. Many conditions that would result in inaccurate airspeed estimation occur at low groundspeeds or low raw airspeeds. In some embodiments, airspeed estimation by complementary filtering may only be performed when the groundspeed of the rotorcraft 101 is greater than a predefined threshold. Likewise, in some embodiments, airspeed estimation by complementary filtering may only be performed when the raw airspeed of the rotorcraft 101 is greater than a predefined threshold.

Figure 8 is a block diagram of a method 801 for controlling a rotorcraft, according to some embodiments. The method 801 may be implemented as part of the flight control system 201. In particular, the FCCs 205 may perform the method 801 when controlling flight of the rotorcraft 101.

In process 803, the groundspeed of the rotorcraft 101 is measured. The groundspeed may be measured by a GPS, a VHF Omnidirectional Range sensor, or the like. In process 805, the groundspeed of the rotorcraft 101 is compared to a predetermined threshold. In some embodiments, the predetermined threshold is in the range from 25 knots to 40 knots. It should be appreciated that the predetermined threshold may be varied to optimize response in a given rotorcraft application.

When the groundspeed of the rotorcraft 101 is greater than the predetermined threshold, in process 807, the airspeed of the rotorcraft is estimated by combining multiple different signals with a complimentary filter. In some embodiments, the complimentary filter combines a raw airspeed signal from, e.g., an ASI, and a derived airspeed signal from, e.g., an accelerometer. As noted above, one of the signals may have high-frequency noise, and another of the signals may have low-frequency noise. In process 809, flight of the rotorcraft 101 is controlled based on the estimated airspeed ($V_{A_EST}$) of the rotorcraft 101. One or more loops of the flight control system 201, such as the outer loop 313, middle loop 315, and/or inner loop 317 rely on a determined airspeed value for the rotorcraft 101. The flight control devices of the rotorcraft 101 may be adjusted based on the determined airspeed value to change the flight characteristics of the rotorcraft 101. The $V_{A_EST}$ value is used by the control loops for the determined airspeed.

When the groundspeed of the rotorcraft 101 is less than the predetermined threshold, in process 811, the airspeed of the rotorcraft is directly measured by receiving a raw airspeed value from, e.g., a pitot tube, an ASI, or the like. Complimentary filtering with multiple signals is not performed when directly measuring the airspeed of the rotorcraft 101. In process 813, flight of the rotorcraft 101 is controlled based on the raw airspeed value ($V_{A_RAW}$) of the rotorcraft. One or more loops of the flight control system 201, such as the outer loop 313, middle loop 315, and/or inner loop 317 rely on a determined airspeed value for the rotorcraft 101. The flight control devices of the rotorcraft 101 may be adjusted based on the determined airspeed value to change the flight characteristics of the rotorcraft 101. The $V_{A_RAW}$ value is used by the control loops for the determined airspeed.

In some embodiments, the predetermined threshold for the groundspeed includes hysteresis. For example, the predetermined threshold may be 40 knots (or more generally, a first threshold) when the rotorcraft 101 is accelerating, such that the raw airspeed value ($V_{A_RAW}$) is used for control until the groundspeed exceed 40 knots, at which time the estimated airspeed ($V_{A_EST}$) is used for control. Likewise, the predetermined threshold may be 25 knots (or more generally, a lesser second threshold) when the rotorcraft 101 is decelerating, such that the estimated airspeed ($V_{A_EST}$) is for control used until the groundspeed is less than 25 knots, at which time the current raw airspeed value ($V_{A_RAW}$) is once again used for control. It should be appreciated that the thresholds may be varied to optimize response in a given rotorcraft application.

The method 801 describes a method for performing airspeed estimation by complementary filtering when the groundspeed of the rotorcraft 101 is greater than a predefined threshold. A method similar to the method 801 may also be used for performing airspeed estimation by complementary filtering when the raw airspeed of the rotorcraft 101 is greater than a predefined threshold. In such embodiments, the raw airspeed may be used instead of the groundspeed for the processes 803 through 813. The raw airspeed may be measured by a pitot-static system or other measurement sensor.

Figure 9 is a block diagram of a filter 901 that may be used to realize the first system 401 or second system 501, according to some embodiments. The filter 901 is a complimentary filter used to estimate the airspeed of the rotorcraft 101, and produces an estimated airspeed ($V_{A_EST}$) signal. The filter 901 is implemented with three integrators 903, 905, and 907. Further, the filter 901 is indicative of embodiments where one input signal is derived from a transduced sensor signal, and another signal contains raw airspeed values directly transduced from another sensor. For example, a first input signal may be derived from a signal from an accelerometer (e.g., a(t)), and a second input signal may be a raw airspeed value directly measured by air data systems of the rotorcraft 101 (e.g., v(t)), such as with a variometer or other ASI. The first input signal includes raw values for the forward acceleration of the rotorcraft 101, and the second input signal includes raw values for the forward airspeed of the rotorcraft 101. It should be appreciated that the filter 901 may be used to estimate either lateral or longitudinal airspeeds.

Resetting of the integrators 903, 905, and 907 is controlled by a resetter 909. Upon a reset, the integrators 903 and 905 are reset to values of zero. The integrator 907 may be reset to one of several possible values, as determined by the resetter 909. As noted above, estimation of the rotorcraft 101 airspeed by complementary filtering may only be performed when the groundspeed or raw airspeed of the rotorcraft 101 is greater than a predefined threshold. When the groundspeed or raw airspeed of the rotorcraft 101 is less than the predefined threshold, the filter 901 is bypassed. The resetter 909 bypasses the filter 901 by continually resetting the integrator 907 to the current raw airspeed value (e.g., v(t)). When the groundspeed or raw airspeed of the rotorcraft 101 is greater than the predefined threshold, the filter 901 is permitted to operate normally. Under normal operation, the integrator 907 is reset to a delayed value for the estimated airspeed ($V_{A_EST}$), and the integrators 903, 905, and 907 may be reset under similar conditions as the integrators 703, 705, and 707 (see Figure 7).

In some embodiments, the resetter 909 includes a mechanism to filter or rate-limit transitions from use of the estimated airspeed value ($V_{A_EST}$) to use of the raw airspeed value ($V_{A_RAW}$). Such a mechanism may help avoid a step change in the displayed airspeed and may allow better control of the rotorcraft 101. For example, the resetter 909 may include a Constant Period Transient-Free Switch (CPTFS) limiter. In some embodiments, a rate-limiting transition is performed when the filter 901 transitions from the initialized state (e.g., when the raw airspeed value is used) to the active state (e.g., when the estimated airspeed value is used), and no rate-limiting transition is performed when the filter 901 transitions from the active state to the initialized state.

Although the embodiments of Figures 8 and 9 are described in the context of estimating the airspeed of the rotorcraft 101, it should be appreciated that embodiment techniques may be used to estimate speeds along other directions. In particular, the vertical speed could also be estimated using analogous techniques.

Embodiments may achieve advantages. Estimating the vertical speed and/or airspeed of the rotorcraft 101 by combining multiple different signals may result in more accurate values than directly measuring raw speed values. In particular, by combining multiple noisy signals with a complementary filtering system, the vertical speed and/or airspeed may be accurately estimated and flight of the rotorcraft 101 may be better controlled.

Although this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that any such modifications or embodiments encompass the scope of the appended claims.

## Claims

1. A method (601; 801) comprising:

    receiving (603) a first sensor signal from a first aircraft sensor of a rotorcraft, the first sensor signal including raw airspeed values of the rotorcraft;
    receiving (605) a second sensor signal from a second aircraft sensor of the rotorcraft, the second aircraft sensor being different from the first aircraft sensor;
    measuring (803) a first speed of the rotorcraft, the first speed being groundspeed of the rotorcraft or raw airspeed of the rotorcraft, the groundspeed of the rotorcraft measured by a GPS, a VHF Omnidirectional Range sensor, or the like;
    determining (805) airspeed values of the rotorcraft, the determining comprising:

        using the raw airspeed values in the first sensor signal as the determined airspeed values in response to the first speed of the rotorcraft being less than or equal to a predetermined value; and
        estimating (607) the determined airspeed values in response to the first speed of the rotorcraft being greater than the predetermined value, the estimating comprising:

            combining the first sensor signal and the second sensor signal with a complementary filter to determine estimated airspeed values; and
            using the estimated airspeed values as the determined airspeed values; and

    adjusting (609; 809) flight control devices of the rotorcraft according to the determined airspeed values.

2. The method of claim 1, wherein combining the first sensor signal and the second sensor signal comprises:

    integrating the second sensor signal with respect to time to obtain a first filtered signal; and
    adding the first filtered signal and the first sensor signal to obtain a second filtered signal, the second filtered signal including the estimated airspeed values of the rotorcraft.

3. The method of any preceding claim, wherein the predetermined value is a first threshold when the rotorcraft is accelerating, and the predetermined value is a second threshold when the rotorcraft is decelerating, the second threshold being less than the first threshold; and optionally or preferably wherein the first threshold is 40 knots, and the second threshold is 25 knots.

4. The method of any preceding method claim, further comprising:
resetting the complementary filter in response to the first speed of the rotorcraft being less than the predetermined value, wherein the complementary filter is implemented with three integrators (903, 905,907), and resetting the complementary filter comprises resetting said integrators to bypass the filter (901).

**5.** The method of claim 4, wherein the combining the first sensor signal and the second sensor signal with the complementary filter comprises:

a) filtering the first sensor signal with a first filter to obtain a first filtered signal;

filtering the second sensor signal with a second filter to obtain a second filtered signal, the second filter and the first filter complementing one another; and
adding the first filtered signal and the second filtered signal to determine the estimated speed of the rotorcraft; or

b) subtracting the first sensor signal from the second sensor signal to obtain a noise difference signal;

filtering the noise difference signal to obtain a filtered difference signal; and
adding the first sensor signal and the filtered difference signal to determine the estimated speed of the rotorcraft.

**6.** The method of claim 4 or claim 5, wherein the second aircraft sensor is an accelerometer.

**7.** The method of claim 6 wherein the receiving the second sensor signal comprises:

receiving an acceleration signal from the accelerometer; and
integrating the acceleration signal to obtain the second sensor signal.

**8.** The method of any one of claims 4 to 7, wherein the first aircraft sensor is a pitot tube.

**9.** The method of claim 8 wherein the receiving the first sensor signal comprises:

receiving a velocity signal from the pitot tube; and
using the velocity signal as the first sensor signal.

**10.** The method of any preceding claim, wherein the adjusting the flight control devices of the rotorcraft comprises: actuating a swashplate or tail rotor actuator of the rotorcraft according to the estimated speed.

**11.** The method of any of claims 1 to 5, wherein the first aircraft sensor is a pitot tube; and optionally or preferably wherein the second aircraft sensor is an accelerometer.

**12.** A rotorcraft (101) comprising:

a pitot tube;
an accelerometer (207);
a plurality of flight control devices (107,113); and
a flight control computer (205) coupled to the pitot tube, the accelerometer, and the flight control devices, the flight control computer being configured to:

receive raw airspeed values of the rotorcraft from the pitot tube;
receive raw forward acceleration values of the rotorcraft from the accelerometer;
measure a first speed of the rotorcraft, the first speed being groundspeed of the rotorcraft or raw airspeed of the rotorcraft;
determine airspeed values of the rotorcraft by:

using the raw airspeed values as the determined airspeed values in response to the first speed of the rotorcraft being less than or equal to a predetermined value; and
estimating the determined airspeed values by combining the raw airspeed values and the raw forward acceleration values in response to the first speed of the rotorcraft being greater than the predetermined value; and

adjusting flight control devices of the rotorcraft according to the determined airspeed values.

**13.** The rotorcraft of claim 12, wherein the flight control computer is configured to estimate the determined airspeed values by:

combining the raw airspeed values and the raw forward acceleration values with a complementary filter (403, 405) to determine estimated airspeed values; and
using the estimated airspeed values as the determined airspeed values.

**14.** The rotorcraft of claim 13, wherein the flight control computer is configured to combine the raw airspeed values and the raw forward acceleration values by:

integrating the raw forward acceleration values with respect to time to obtain integrated forward acceleration values; and
adding the integrated forward acceleration values and the raw airspeed values to obtain the estimated airspeed values.

**15.** The rotorcraft of claim 12 or claim 13, wherein the predetermined value is a first threshold when the first speed of the rotorcraft is less than or equal to the predetermined value, and the predetermined value is a second threshold when the first speed of the rotorcraft is greater than the predetermined value, the second threshold being less than the first threshold.

**Patentansprüche**

**1.** Verfahren (601; 801), umfassend:

Empfangen (603) eines ersten Sensorsignals von einem ersten Luftfahrzeugsensor eines Drehflüglers, wobei das erste Sensorsignal Rohfluggeschwindigkeitswerte des Drehflüglers beinhaltet;
Empfangen (605) eines zweiten Sensorsignals von einem zweiten Luftfahrzeugsensor des Drehflüglers, wobei sich der zweite Luftfahrzeugsensor von dem ersten Luftfahrzeugsensor unterscheidet;
Messen (803) einer ersten Geschwindigkeit des Drehflüglers, wobei die erste Geschwindigkeit eine Bodengeschwindigkeit des Drehflüglers oder eine Rohfluggeschwindigkeit des Drehflüglers ist, die Bodengeschwindigkeit des Drehflüglers durch ein GPS, einen VHF-Sensor mit omnidirektionaler Reichweite oder dergleichen gemessen wird;
Bestimmen (805) von Fluggeschwindigkeitswerten des Drehflüglers, wobei das Bestimmen Folgendes umfasst:

Verwenden der Rohfluggeschwindigkeitswerte in dem ersten Sensorsignal als die bestimmten Fluggeschwindigkeitswerte als Reaktion darauf, dass die erste Geschwindigkeit des Drehflüglers kleiner oder gleich einem vorbestimmten Wert ist; und
Schätzen (607) der bestimmten Fluggeschwindigkeitswerte als Reaktion darauf, dass die erste Geschwindigkeit des Drehflüglers größer als der vorbestimmte Wert ist, wobei das Schätzen Folgendes umfasst:

Kombinieren des ersten Sensorsignals und des zweiten Sensorsignals mit einem ergänzenden Filter zum Bestimmen von geschätzten Luftgeschwindigkeitswerten; und
Verwenden der geschätzten Luftgeschwindigkeitswerte als die bestimmten Luftgeschwindigkeitswerte; und
Einstellen (609; 809) von Flugsteuervorrichtungen des Drehflüglers gemäß den bestimmten Luftgeschwindigkeitswerten.

**2.** Verfahren nach Anspruch 1, wobei Kombinieren des ersten Sensorsignals und des zweiten Sensorsignals Folgendes umfasst:

Integrieren des zweiten Sensorsignals in Bezug auf eine Zeit zum Erlangen des ersten gefilterten Signals; und
Hinzufügen des ersten gefilterten Signals und des ersten Sensorsignals zum Erlangen eines zweiten gefilterten Signals, wobei das zweite gefilterte Signal die geschätzten Fluggeschwindigkeitswerte des Drehflüglers beinhaltet.

**3.** Verfahren nach einem der vorhergehenden Ansprüche, wobei der vorbestimmte Wert ein erster Schwellenwert ist, wenn der Drehflügler beschleunigt, und der vorbestimmte Wert ein zweiter Schwellenwert ist, wenn der Drehflügler abbremst, wobei der zweite Schwellenwert kleiner als der erste Schwellenwert ist; und wobei der erste Schwellenwert optional und vorzugsweise 40 Knoten beträgt und der zweite Schwellenwert 25 Knoten beträgt.

**4.** Verfahren nach einem der vorhergehenden Ansprüche, ferner umfassend:
Zurücksetzen des ergänzenden Filters als Reaktion darauf, dass die erste Geschwindigkeit des Drehflüglers kleiner als der vorbestimmte Wert ist, wobei der ergänzende Filter mit drei Integratoren (903, 905, 907) umgesetzt wird und das Zurücksetzen des ergänzenden Filters ein Zurücksetzen der Integratoren zum Umgehen des Filters (901) umfasst.

**5.** Verfahren nach Anspruch 4, wobei das Kombinieren des ersten Sensorsignals und des zweiten Sensorsignals mit dem ergänzenden Filter Folgendes umfasst:

a) Filtern des ersten Sensorsignals mit einem ersten Filter zum Erlangen eines ersten gefilterten Signals;

Filtern des zweiten Sensorsignals mit einem zweiten Filter zum Erlangen eines zweiten gefilterten Signals, wobei der zweite Filter und der erste Filter einander ergänzen; und
Hinzufügen des ersten gefilterten Signals und des zweiten gefilterten Signals zum Bestimmen der geschätzten Geschwindigkeit des Drehflüglers; oder

b) Subtrahieren des ersten Sensorsignals von dem zweiten Sensorsignal zum Erlangen eines Rauschdifferenzsignals;

Filtern des Rauschdifferenzsignals zum Erlangen eines gefilterten Differenzsignals; und Hinzufügen des ersten Sensorsignals und des gefilterten Differenzsignals zum Bestimmen der geschätzten Geschwindigkeit des Drehflüglers.

**6.** Verfahren nach Anspruch 4 oder Anspruch 5, wobei der zweite Luftfahrzeugsensor ein Beschleunigungsmesser ist.

**7.** Verfahren nach Anspruch 6, wobei das Empfangen des zweiten Sensorsignals Folgendes umfasst:

Empfangen eines Beschleunigungssignals von dem Beschleunigungsmesser; und
Integrieren des Beschleunigungssignals zum Erlangen des zweiten Sensorsignals.

**8.** Verfahren nach einem der Ansprüche 4 bis 7, wobei der erste Luftfahrzeugsensor ein Pitot-Rohr ist.

**9.** Verfahren nach Anspruch 8, wobei das Empfangen des ersten Sensorsignals Folgendes umfasst:

Empfangen eines Geschwindigkeitssignals von dem Pitot-Rohr; und
Verwenden des Geschwindigkeitssignals als das erste Sensorsignal.

**10.** Verfahren nach einem der vorhergehenden Ansprüche, wobei das Einstellen der Flugsteuervorrichtungen des Drehflüglers Folgendes umfasst:
Betätigen einer Betätigungsvorrichtung der Taumelscheibe oder des Heckrotors des Drehflüglers gemäß der geschätzten Geschwindigkeit.

**11.** Verfahren nach einem der Ansprüche 1 bis 5, wobei der erste Luftfahrzeugsensor ein Pitot-Rohr ist; und
wobei der zweite Luftfahrzeugsensor optional oder vorzugsweise ein Beschleunigungsmesser ist.

**12.** Drehflügler (101), umfassend:

ein Pitot-Rohr;
einen Beschleunigungsmesser (207);
eine Vielzahl von Flugsteuervorrichtungen (107, 113); und
einen Flugsteuerungscomputer (205), der mit dem Pitot-Rohr, dem Beschleunigungsmesser und den Flugsteuervorrichtungen gekoppelt ist, wobei der Flugsteuerungscomputer dazu konfiguriert ist:

Rohfluggeschwindigkeitswerte des Drehflüglers von dem Pitot-Rohr zu empfangen;
Roh-Vorwärtsbeschleunigungswerte des Drehflüglers von dem Beschleunigungsmesser zu empfangen;

eine erste Geschwindigkeit des Drehflüglers zu messen, wobei die erste Geschwindigkeit eine Bodengeschwindigkeit des Drehflüglers oder eine Rohfluggeschwindigkeit des Drehflüglers ist;
Fluggeschwindigkeitswerte des Drehflüglers durch Folgendes zu bestimmen:

Verwenden der Rohfluggeschwindigkeitswerte als die bestimmten Fluggeschwindigkeitswerte als Reaktion darauf, dass die erste Geschwindigkeit des Drehflüglers kleiner oder gleich einem vorbestimmten Wert ist; und
Schätzen der bestimmten Fluggeschwindigkeitswerte durch Kombinieren der Rohfluggeschwindigkeitswerte und der Roh-Vorwärtsbeschleunigungswerte als Reaktion darauf, dass die erste Geschwindigkeit des Drehflüglers größer als der vorbestimmte Wert ist; und Einstellen von Flugsteuervorrichtungen des Drehflüglers gemäß den bestimmten Fluggeschwindigkeitswerten.

**13.** Drehflügler nach Anspruch 12, wobei der Flugsteuerungscomputer dazu konfiguriert ist, die bestimmten Fluggeschwindigkeitswerte durch Folgendes zu schätzen:

Kombinieren der Rohfluggeschwindigkeitswerte und der Roh-Vorwärtsbeschleunigungswerte mit einem ergänzenden Filter (403, 405) zum Bestimmen der geschätzten Fluggeschwindigkeitswerte;
und Verwenden der geschätzten Fluggeschwindigkeitswerte als die bestimmten Fluggeschwindigkeitswerte.

**14.** Drehflügler nach Anspruch 13, wobei der Flugsteuerungscomputer dazu konfiguriert ist, die Rohfluggeschwindigkeitswerte und die Roh-Vorwärtsbeschleunigungswerte durch Folgendes zu kombinieren:

Integrieren der Roh-Vorwärtsbeschleunigungswerte in Bezug auf die Zeit zum Erlangen von integrierten Vorwärtsbeschleunigungswerten; und
Hinzufügen der integrierten Vorwärtsbeschleunigungswerte und der Rohfluggeschwindigkeitswerte zum Erlangen der geschätzten Fluggeschwindigkeitswerte.

**15.** Drehflügler nach Anspruch 12 oder 13, wobei der vorbestimmte Wert ein erster Schwellenwert ist, wenn die erste Geschwindigkeit des Drehflüglers kleiner oder gleich dem vorbestimmen Wert ist, und der vorbestimmte Wert ein zweiter Schwellenwert ist, wenn die erste Geschwindigkeit des Drehflüglers größer als der vorbestimmte Wert ist, wobei der zweite Schwellenwert kleiner als der erste Schwellenwert ist.

**Revendications**

**1.** Procédé (601 ; 801) comprenant :

la réception (603) d'un signal de premier capteur provenant d'un premier capteur d'aéronef d'un giravion, le signal de premier capteur comportant des valeurs brutes de vitesse anémométrique du giravion ;
la réception (605) d'un signal de second capteur provenant d'un second capteur d'aéronef du giravion, le second capteur d'aéronef étant différent du premier capteur d'aéronef ;
la mesure (803) d'une première vitesse du giravion, la première vitesse étant la vitesse au sol du giravion ou la vitesse anémométrique brute du giravion, la vitesse au sol du giravion étant mesurée par un GPS, un capteur de portée omnidirectionnelle VHF, ou similaire ;
la détermination (805) des valeurs de vitesse anémométrique du giravion, la détermination comprenant :

l'utilisation des valeurs brutes de vitesse anémométrique dans le signal de premier capteur comme valeurs de vitesse anémométrique déterminées en réponse au fait que la première vitesse du giravion est inférieure ou égale à une valeur prédéterminée ; et
l'estimation (607) des valeurs de vitesse anémométrique déterminées en réponse au fait que la première vitesse du giravion est supérieure à la valeur prédéterminée, l'estimation comprenant :

la combinaison du signal de premier capteur et du signal de second capteur avec un filtre complémentaire pour déterminer des valeurs de vitesse anémométrique estimées ; et
l'utilisation des valeurs de vitesse anémométrique estimées comme valeurs de vitesse anémométrique déterminées ; et
le réglage (609 ; 809) des dispositifs de commande de vol du giravion en fonction des valeurs de vitesse anémométrique déterminées.

**2.** Procédé selon la revendication 1, dans lequel la combinaison du signal de premier capteur et du signal de second capteur comprend :

l'intégration du signal de second capteur par rapport au temps pour obtenir un premier signal filtré ; et
l'ajout du premier signal filtré et du signal de premier capteur pour obtenir un second signal filtré, le second signal filtré comportant les valeurs de vitesse anémométrique estimées du giravion.

**3.** Procédé selon une quelconque revendication précédente, dans lequel la valeur prédéterminée est un premier seuil lorsque le giravion accélère, et la valeur prédéterminée est un second seuil lorsque le giravion décélère, le second seuil étant inférieur au premier seuil ; et éventuellement ou de préférence, dans lequel le premier seuil est de 40 noeuds et le second seuil est de 25 noeuds.

**4.** Procédé selon une quelconque revendication précédente, comprenant en outre :
la réinitialisation du filtre complémentaire en réponse au fait que la première vitesse du giravion est inférieure à la valeur prédéterminée, dans lequel le filtre complémentaire est mis en œuvre avec trois intégrateurs (903, 905, 907), et la réinitialisation du filtre complémentaire comprend la réinitialisation desdits intégrateurs pour contourner le filtre (901) .

**5.** Procédé selon la revendication 4, dans lequel la combinaison du signal de premier capteur et du signal de second capteur avec le filtre complémentaire comprend :

a) le filtrage du signal de premier capteur avec un premier filtre pour obtenir un premier signal filtré ;

le filtrage du signal de second capteur avec un second filtre pour obtenir un second signal filtré, le second filtre et le premier filtre se complétant l'un l'autre ; et
l'ajout du premier signal filtré et du second signal filtré pour déterminer la vitesse estimée du giravion ; ou

b) la soustraction du signal de premier capteur du signal de second capteur pour obtenir un signal de différence de bruit ;

le filtrage du signal de différence de bruit pour obtenir un signal de différence filtré ; et
l'ajout du signal de premier capteur et du signal de différence filtré pour déterminer la vitesse estimée du giravion.

**6.** Procédé selon la revendication 4 ou la revendication 5, dans lequel le second capteur d'aéronef est un accéléromètre.

**7.** Procédé selon la revendication 6, dans lequel la réception du signal de second capteur comprend :

la réception d'un signal d'accélération provenant de l'accéléromètre ; et
l'intégration du signal d'accélération pour obtenir le signal de second capteur.

**8.** Procédé selon l'une quelconque des revendications 4 à 7, dans lequel le premier capteur d'aéronef est un tube de Pitot.

**9.** Procédé selon la revendication 8, dans lequel la réception du signal de premier capteur comprend :

la réception d'un signal de vitesse provenant du tube de Pitot ; et
l'utilisation du signal de vitesse comme signal de premier capteur.

**10.** Procédé selon une quelconque revendication précédente, dans lequel le réglage des dispositifs de commande de vol du giravion comprend :
l'actionnement d'un actionneur de plateau oscillant ou de rotor de queue du giravion en fonction de la vitesse estimée.

**11.** Procédé selon l'une quelconque des revendications 1 à 5, dans lequel le premier capteur d'aéronef est un tube de Pitot ; et éventuellement ou de préférence, dans lequel le second capteur d'aéronef est un accéléromètre.

**12.** Giravion (101) comprenant :

un tube de Pitot ;
un accéléromètre (207) ;
une pluralité de dispositifs de commande de vol (107, 113) ; et
un ordinateur de commande de vol (205) couplé au tube de Pitot, à l'accéléromètre et aux dispositifs de commande de vol, l'ordinateur de commande de vol étant configuré pour :

recevoir des valeurs brutes de vitesse anémométrique du giravion en provenance du tube de Pitot ;
recevoir des valeurs brutes d'accélération vers l'avant du giravion provenant de l'accéléromètre ;
mesurer une première vitesse du giravion, la première vitesse étant la vitesse au sol du giravion ou la vitesse anémométrique brute du giravion ;
déterminer des valeurs de vitesse anémométrique du giravion en :

utilisant les valeurs brutes de vitesse anémométrique comme valeurs de vitesse anémométrique déterminées en réponse au fait que la première vitesse du giravion est inférieure ou égale à une valeur prédéterminée ; et
estimant les valeurs de vitesse anémométrique déterminées en combinant les valeurs brutes de vitesse anémométrique et les valeurs brutes d'accélération vers l'avant en réponse au fait que la première vitesse du giravion est supérieure à la valeur prédéterminée ; et
réglant des dispositifs de commande de vol du giravion en fonction des valeurs de vitesse anémométrique déterminées.

**13.** Giravion selon la revendication 12, dans lequel l'ordinateur de commande de vol est configuré pour estimer les valeurs de vitesse anémométrique déterminées en :

combinant les valeurs brutes de vitesse anémométrique et les valeurs brutes d'accélération vers l'avant avec un filtre complémentaire (403, 405) pour déterminer des valeurs de vitesse anémométrique estimées ; et
utilisant les valeurs de vitesse anémométrique estimées comme valeurs de vitesse anémométrique déterminées.

**14.** Giravion selon la revendication 13, dans lequel l'ordinateur de commande de vol est configuré pour combiner les valeurs brutes de vitesse anémométrique et les valeurs brutes d'accélération vers l'avant en :

intégrant les valeurs brutes d'accélération vers l'avant par rapport au temps pour obtenir des valeurs d'accélération vers l'avant intégrées ; et
ajoutant les valeurs d'accélération vers l'avant intégrées et les valeurs brutes de vitesse anémométrique pour obtenir les valeurs de vitesse anémométrique estimées.

**15.** Giravion selon la revendication 12 ou la revendication 13, dans lequel la valeur prédéterminée est un premier seuil lorsque la première vitesse du giravion est inférieure ou égale à la valeur prédéterminée, et la valeur prédéterminée est un second seuil lorsque la première vitesse du giravion est supérieure à la valeur prédéterminée, le second seuil étant inférieur au premier seuil.

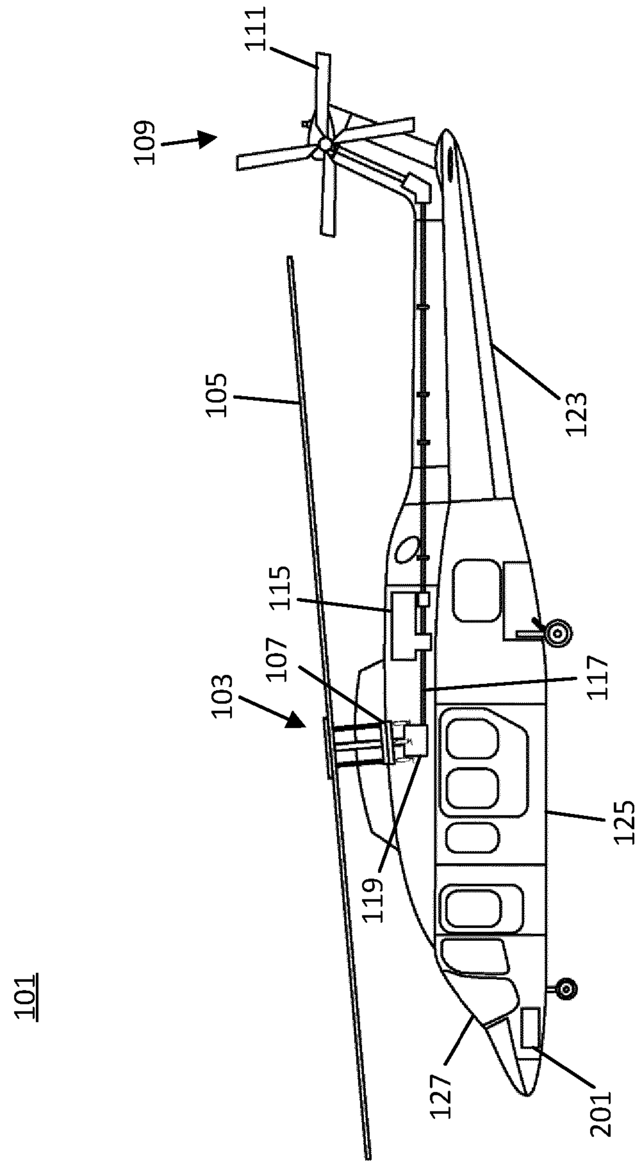


*Fig. 1*

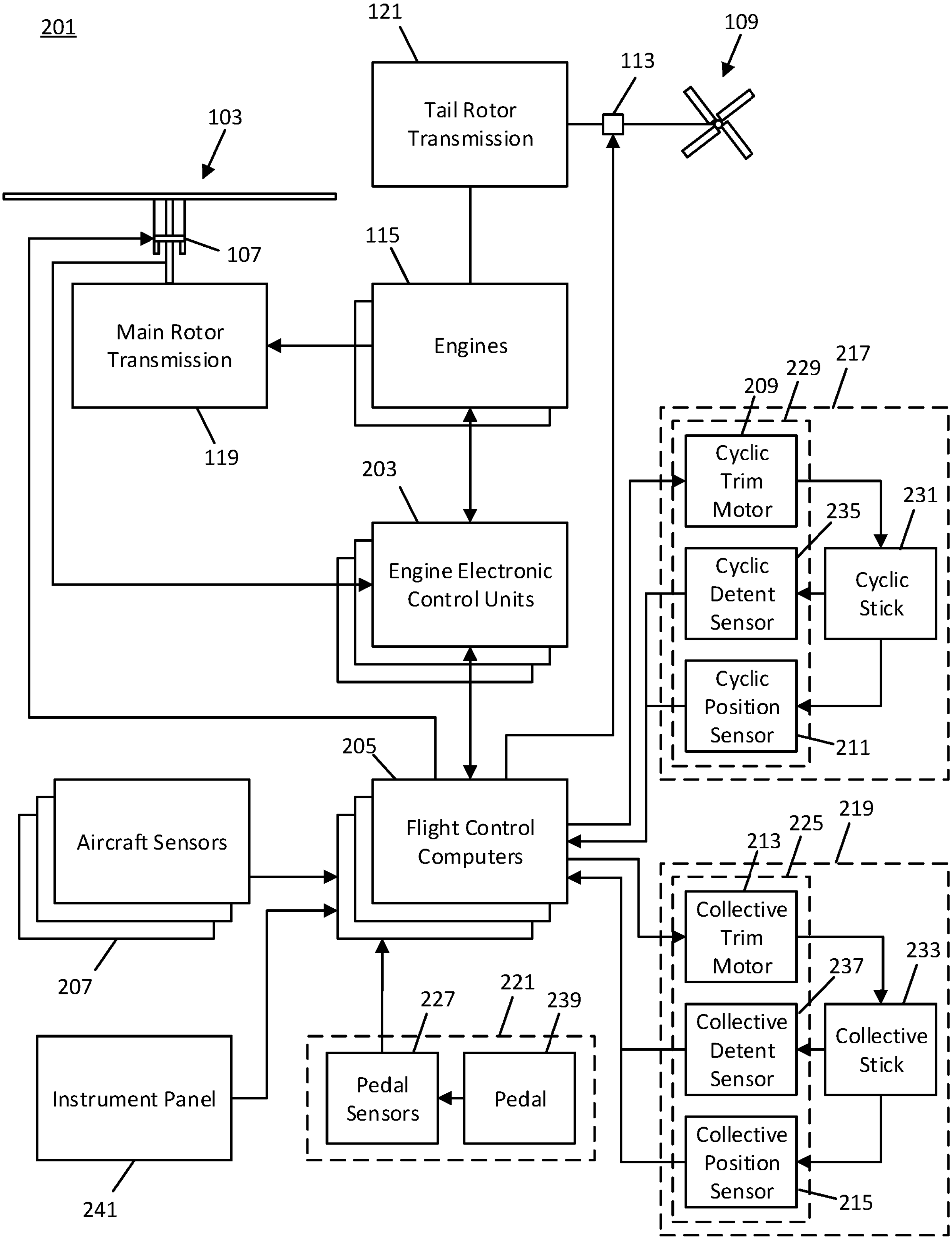
201
121
109
113
103
Tail Rotor Transmission
107
115
Main Rotor Transmission
Engines
217
229
119
209
203
Cyclic Trim Motor
231
235
Engine Electronic Control Units
Cyclic Detent Sensor
Cyclic Stick
Cyclic Position Sensor
205
211
219
Aircraft Sensors
Flight Control Computers
225
213
Collective Trim Motor
233
237
207
227
221
239
Collective Detent Sensor
Collective Stick
Instrument Panel
Pedal Sensors
Pedal
Collective Position Sensor
215
241

*Fig. 2A*

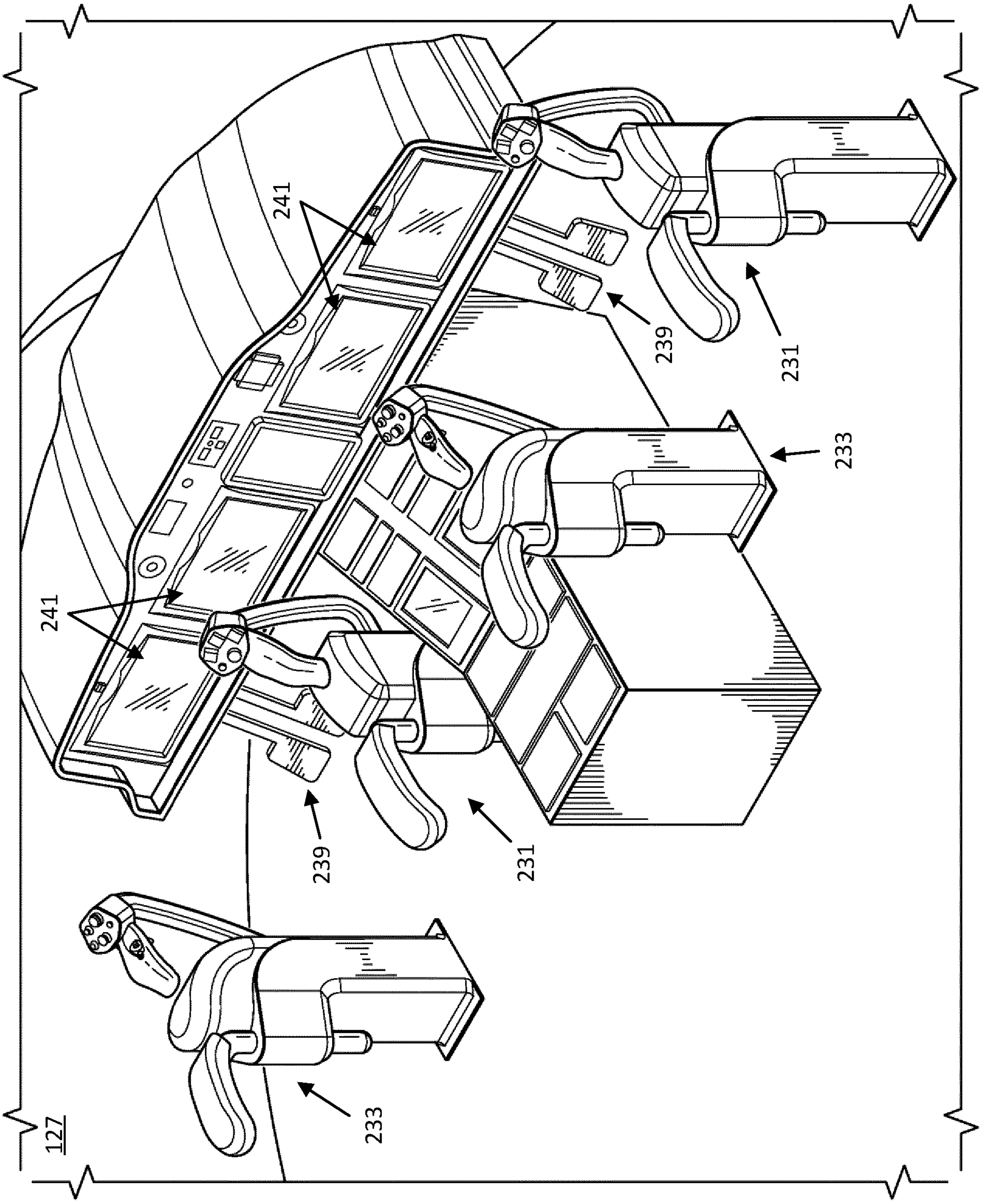


*Fig. 2B*

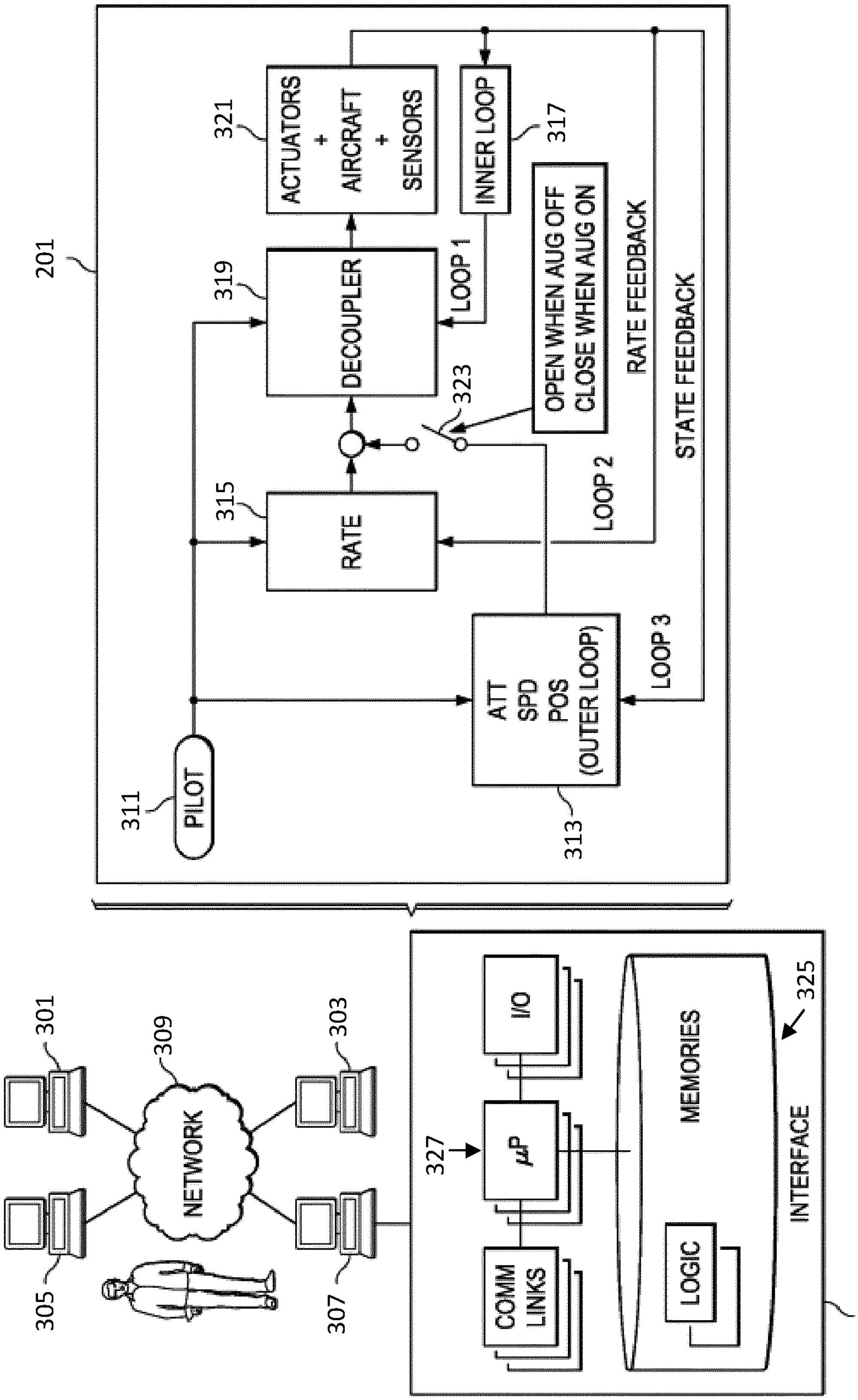
201
311
PILOT
313
ATT
SPD
POS
(OUTER LOOP)
315
RATE
319
DECOUPLER
321
ACTUATORS
+
AIRCRAFT
+
SENSORS
317
INNER LOOP
323
OPEN WHEN AUG OFF
CLOSE WHEN AUG ON
LOOP 1
LOOP 2
LOOP 3
RATE FEEDBACK
STATE FEEDBACK
301
303
305
307
309
NETWORK
205
COMM
LINKS
327
μP
I/O
325
MEMORIES
LOGIC
INTERFACE

*Fig. 3*

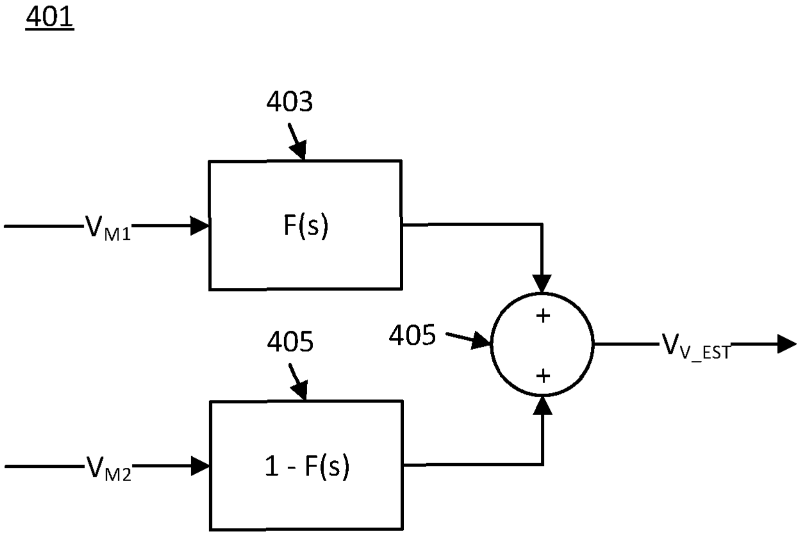
401
403
V M1
F(s)
405
405
+
+
V V_EST
V M2
1 - F(s)

Fig. 4

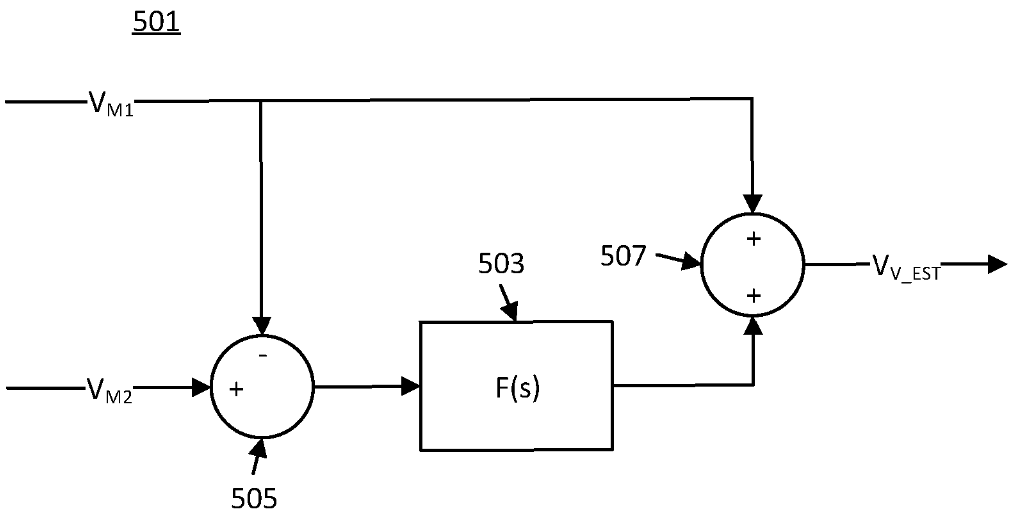
501
V M1
507
503
+
+
V V_EST
V M2
-
+
F(s)
505

Fig. 5

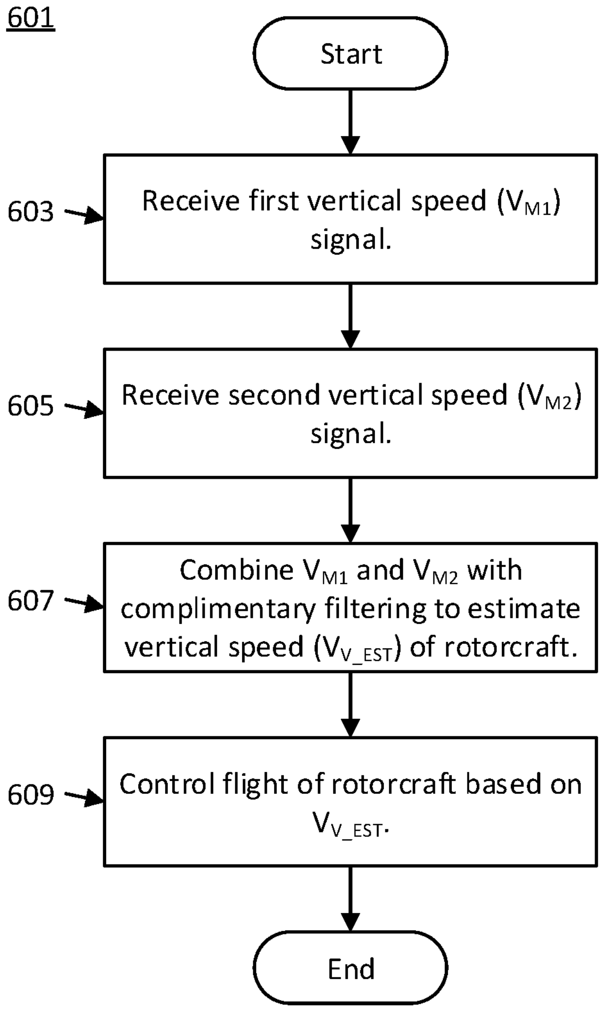
601
Start
603
Receive first vertical speed ($V_{M1}$) signal.
605
Receive second vertical speed ($V_{M2}$) signal.
607
Combine $V_{M1}$ and $V_{M2}$ with complimentary filtering to estimate vertical speed ($V_{V_EST}$) of rotorcraft.
609
Control flight of rotorcraft based on $V_{V_EST}$.
End

*Fig. 6*

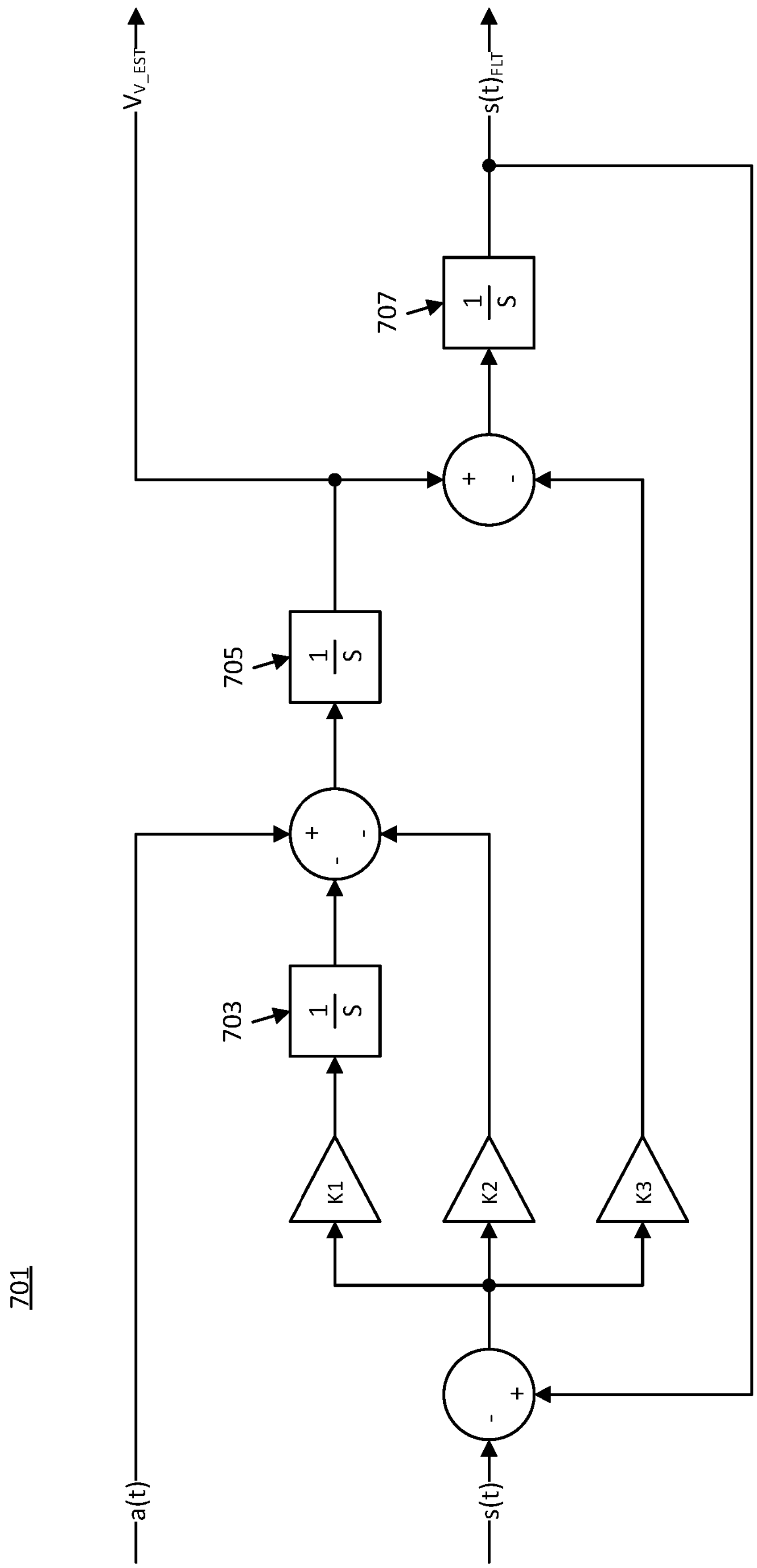


*Fig. 7*

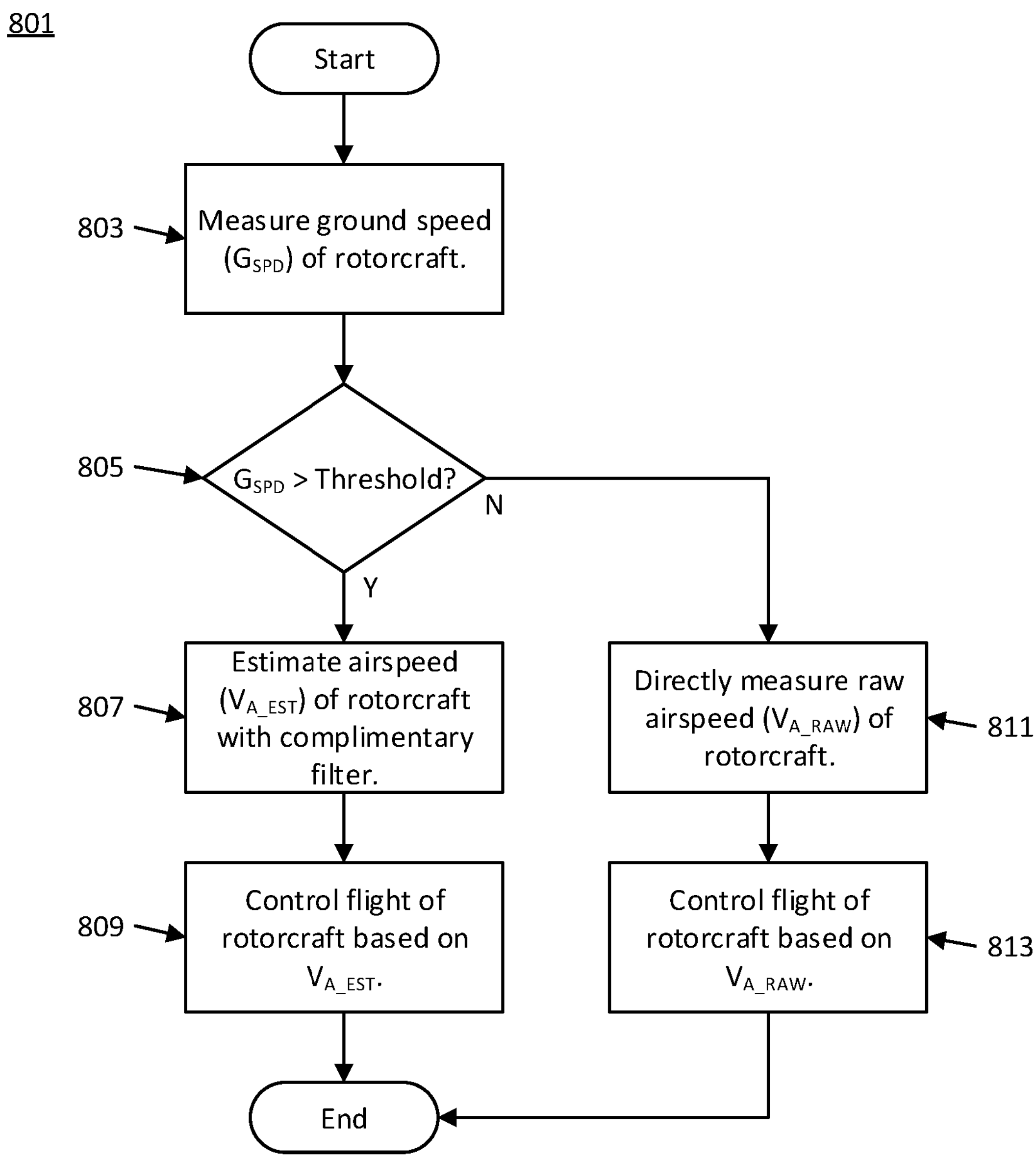
801
Start
Measure ground speed ($G_{SPD}$) of rotorcraft.
803
$G_{SPD}$ > Threshold?
805
N
Y
Estimate airspeed ($V_{A_EST}$) of rotorcraft with complimentary filter.
807
Directly measure raw airspeed ($V_{A_RAW}$) of rotorcraft.
811
Control flight of rotorcraft based on $V_{A_EST}$.
809
Control flight of rotorcraft based on $V_{A_RAW}$.
813
End

*Fig. 8*

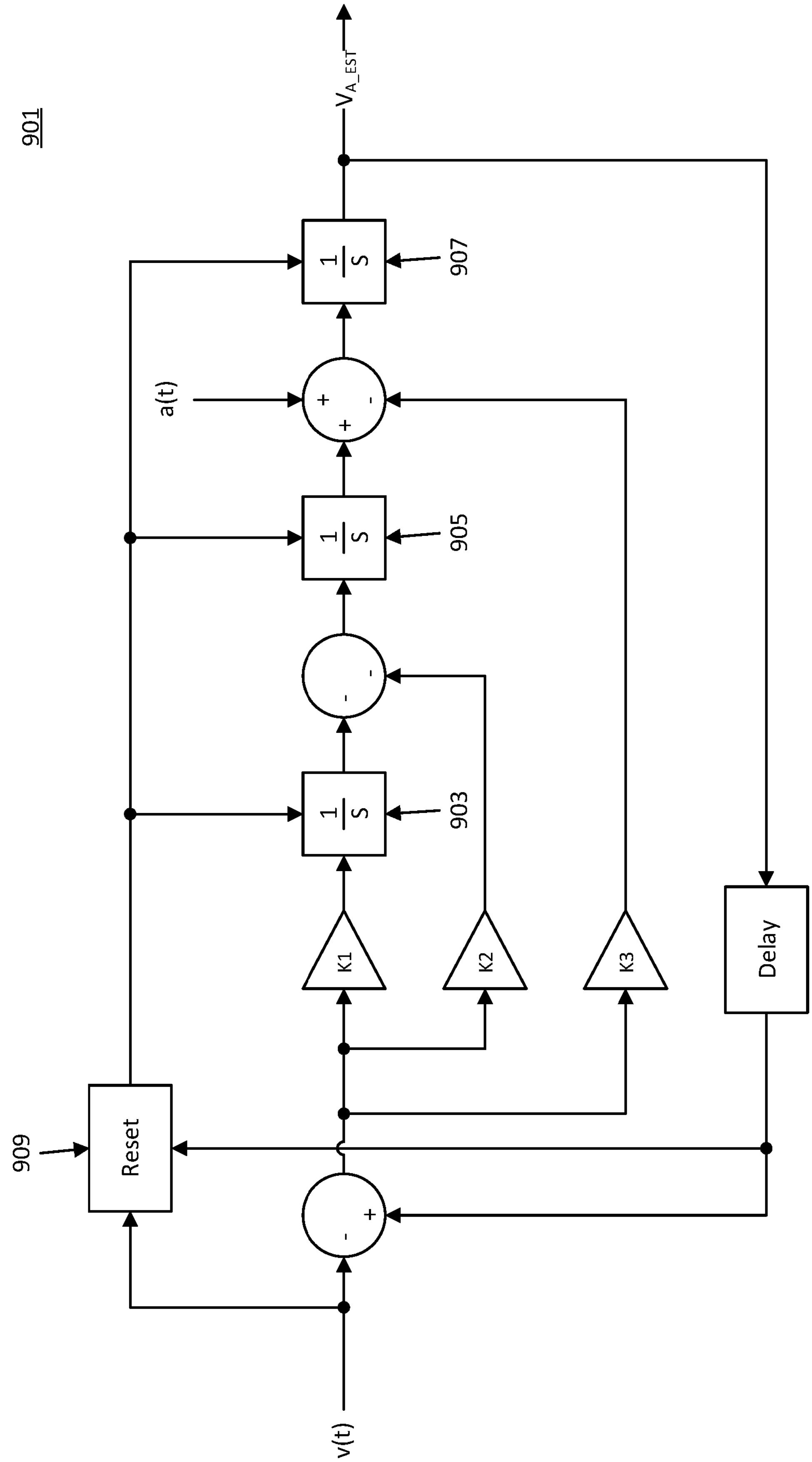


*Fig. 9*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62787602
- WO 2016037035 A